# EUROPÄISCHE PATENTSCHRIFT

(11) **EP 0 992 655 B1**
(45) Veröffentlichungstag und Bekanntmachung des Hinweises auf die Patenterteilung: **08.12.2004**
(21) Anmeldenummer: 99810860.9
(22) Anmeldetag: 24.09.1999
(51) Int. Cl.: F01D 5/18, F23R 3/00

(54) **Kühlkanal für ein thermisch hochbelastetes Bauteil**
Cooling channel for thermally highly stressed elements
Canal de réfrigération pour éléments thermiquement fortement chargés

(30) Priorität: 08.10.1998 DE 19846332
(43) Veröffentlichungstag der Anmeldung: 12.04.2000
(73) Patentinhaber: ALSTOM Technology Ltd, 5400 Baden (CH)
(72) Erfinder: Beeck, Alexander, Dr., 79790 Küssaberg (DE); von Arx, Beat, 4632 Trimbach (CH); Vogeler, Konrad, Dr., 79790 Küssaberg (DE); Weigand, Bernhard, Dr., 79787 Lauchringen (DE)

(56) Entgegenhaltungen:
- EP-A- 0 527 554
- GB-A- 1 410 014
- US-A- 4 514 144
- US-A- 5 232 343
- US-A- 5 681 144
- US-A- 5 695 320
- US-A- 5 695 321
- US-A- 5 700 132
- US-A- 5 738 493

## Beschreibung

### Technisches Gebiet

Die Erfindung betrifft einen Kühlkanal eines thermisch hochbelasteten Bauteils gemäß dem Oberbegriff des Anspruchs 1.

### Stand der Technik

Bei Strömungsmaschinen, insbesondere bei Gasturbinen ist es ganz allgemein bekannt, thermisch hochbelastete Bauteile durch integrierte Kühlkanäle zu kühlen, wobei als Kühlmedium oder Kühlfluid Luft verwendet wird, die als Teilluftstrom aus dem Arbeitsmedium abgezweigt wird.

Bei der Kühlung von Gasturbinenschaufeln oder Brennkammerwänden tritt das Problem auf, dass sehr hohe interne Wärmeübergangszahlen realisiert werden müssen, um den von außen eingetragenen Wärmestrom an das Kühlfluid abzugeben und die Materialtemperatur auf den maximal zulässigen Wert abzusenken. Man wendet deshalb spezielle Anfachungsmechanismen zur verbesserten Wärmeübertragung an, wie beispielsweise Rippen oder Pins.

Eine grundlegende Untersuchung zu dieser Problematik findet sich in Hong, Y. J. und Hsieh, S. S. Heat Transfer and friction factor measurements in ducts with staggered and in-line ribs", Journal of Heat Transfer 1993, pp 58-65. Darin sind Untersuchungen zur Verbesserung des Wärmeübergangs durch eine Rippenanordnung in einem geradlinig verlaufenden Kühlkanal mit rechteckförmigem Querschnitt beschrieben. Die Versuchsergebnisse zeigen, dass eine versetzte Rippenanordnung, bei der die Rippen abwechselnd an den gegenüberliegenden Wänden angeordnet sind, gegenüber einer nicht versetzten Anordnung Vorteile hinsichtlich einer verbesserten Wärmeübergangszahl und eines geringeren Druckverlustes der Kühlmittelströmung aufweist.

In einer konkreten Anwendung dieser Erkenntnis wurde gemäß der EP 0 825 332 A1, von der die Erfindung ausgeht, eine kühlbare Schaufel konzipiert. Der Kühlkanal entsteht als Hohlraum zwischen einer saugseitigen und einer druckseitigen Wand, die über einen Vorder- und einen Hinterkantenbereich miteinander verbunden sind. Der hierdurch entstehende Hohlraum besitzt einen sichelförmigen, orthogonal zur Längsrichtung gekrümmten Querschnitt und erstreckt sich in Längsrichtung geradlinig zwischen Schaufelfuß und Schaufelspitze. Im Hohlraum sind abwechselnd auf der saug- und der druckseitigen Wand Kühlrippen angeordnet, die gegenüber einer projizierten Mittenachse einen spitzen Winkel einschließen, wobei die Mittenachse aus einer Orthogonalprojektion einer Ebene entsteht, die radial zur Schaufel und senkrecht zu den Innenseiten der Wände verläuft und an der breitesten Stelle des Hohlraumes angeordnet ist. Das Kühlfluid wird somit in einer Art Wellenbewegung durch den Kühlkanal hindurchgeführt, wobei die spezielle Form der Rippen für eine gute Kühleffizienz sorgt.

Obwohl sich dieses Kühlkonzept in der Praxis dem Grunde nach bewährt hat, stößt es insbesondere bei stark verwundenen und gewölbten Schaufelgeometrien auf Probleme hinsichtlich der Gleichmäßigkeit der Temperaturverteilung am Schaufelblatt, die teilweise zu unzulässig hohen Spannungen führt.

Die Schriften EP-A-0 527 554, US-A-5 681 144, US-A-5,695, 321, US-A-4,514,144, US-A-5,70,132, US-A-5,695,320, US-A-5,738,493, GB-A-1,410,014 und US-A-5,232,343 offenbaren Turbinenschaufeln, die ein interne Kühlsysteme aufweisen. Diese Kühlsysteme weisen zur verbesserten Wärmeübertragung verschiedenartige Rippenkonfigurationen auf.

### Darstellung der Erfindung

Die Erfindung versucht, die beschriebenen Nachteile zu vermeiden. Ihr liegt die Aufgabe zugrunde, einen Kühlkanal eines thermisch hochbelasteten Bauteils der eingangs genannten Art anzugeben, der es ermöglicht, die Kühlwirkung auch bei einem orthogonal zur Längsrichtung sehr stark gekrümmten Verlauf des Hohlraumes weiter zu vergleichmäßigen und auf diese Weise den Bedarf an Kühlmedium zu minimieren.

Erfindungsgemäß wird dies dadurch die Merkmale des Anspruchs 1 erreicht.

Konkret verfolgte man damit die Zielsetzung, dass auch im Falle eines sehr stark gekrümmten Verlaufs der Wände die Rippen in jedem Punkt einen konstanten Abstand zu den an der gegenüberliegenden Wand versetzt angeordneten Rippen einhalten. Es ist deshalb gemäß der Erfindung erforderlich, die einzelnen Rippen punktweise so zu konstruieren, dass jeweils zwei einander gegenüberliegende Rippen an jedem Punkt des Hohlraumes in Strömungsrichtung genau einen Abstand voneinander aufweisen, der der halben lokalen Teilung entspricht. Als Ergebnis entstehen Rippen, die nicht mehr aus zwei geradlinig verlaufenden Schenkeln aufgebaut sind, sondern eine dreidimensional gekrümmte Form aufweisen. Damit gelingt es, die Anfachung der Wärmeübertragung auf das Kühlfluid zu vergleichmäßigen und dessen Druckverlust aufgrund der strömungsmechanischen Optimierung so gering wie möglich zu halten.

Bevorzugt werden die Rippen so ausgelegt, dass das Verhältnis von lokaler Rippenteilung zu einer lokalen Rippenhöhe im Wesentlichen an jedem Punkt der Rippe konstant ist. Hierdurch erzielt man eine in Strömungsrichtung des Kühlfluids betrachtet konstant gehaltene Wärmeübertragungsintensivierung mit dem Ergebnis einer nicht stark variierenden Temperaturverteilung und damit geringen Wärmespannungen im Bauteil.

Gemäß einer weiteren, bevorzugten Variante ist es möglich, das Verhältnis von lokaler Rippenhöhe zu einer lokalen Hohlraumhöhe zu variieren und hierdurch lokale Überhöhungen der Rippe zu realisieren. Auf diese Weise ist es möglich, das Kühlfluid bevorzugt in thermisch hochbelastete Randbereiche des Hohlraumes durch Sekundärströmungen zu zwingen. Durch die auftretenden Sekundärströmungen wird das Kühlfluid vom Randbereich mit dem Kühlfluid im Kernbereich gemischt, wo die von außen eingetragene Wärmelast niedrig ist.

Darüberhinaus kann man vorteilhafterweise das Verhältnis von lokaler Rippenteilung zu lokaler Rippenhöhe derart anpassen, dass eine gleichmäßige Temperatur in Längsrichtung des Kanals eingehalten wird.

Die Kombination der beiden zuletzt genannten Maßnahmen führt für beliebige Kühlkanalverläufe zu einer extremen Vergleichmäßigung der Temperaturverteilung sowohl in Längsrichtung als auch in einer hierzu senkrecht verlaufenden Querrichtung.

Da insbesondere bei Kühlkanälen mit vergleichsweise großer Länge die Kühlfluidtemperatur in Strömungsrichtung durch Aufnahme von Wärmeenergie stark zunehmen kann, wird vorteilhafterweise das Verhältnis zwischen lokaler Rippenhöhe und lokaler Hohlraumhöhe in Strömungsrichtung kontinuierlich erhöht, wodurch sich die Temperaturverteilung in Längsrichtung noch weiter vergleichmäßigen läßt.

Für die meisten Anwendungsfälle ist es von Vorteil, die Rippen jeweils aus zwei gekrümmten Rippensegmenten und einer Spitze auszubilden, wodurch sich Totwassergebiete im Seitenbereich praktisch vollständig verhindern lassen. Häufig ist gerade an diesen Stellen der Wärmeeintrag am höchsten, so dass es besonders dort auf eine Intensivierung der Kühlwirkung ankommt.

Besonders bevorzugt sind die Rippen so gestaltet, dass sie in einer Orthogonalprojektion als Winkel mit geradlinig verlaufenden Schenkeln abbildbar sind. Dies stellt für eine Vielzahl von in der Praxis auftretenden Anwendungsfällen eine unter strömungsmechanisch optimal zu betrachtende Rippenform dar, die konstruktiv mit vertretbarem Aufwand herstellbar ist.

Besonders bevorzugt sind hierbei die Winkel symmetrisch in Bezug auf die Mittenachse und parallel zueinander angeordnet.

Obwohl das erfindungsgemäße Kühlkonzept grundsätzlich für an sich beliebige Kühlkanalkonfigurationen anwendbar ist, eignet es sich ganz besonders beim Einsatz an einer kühlbaren Turbinenschaufel oder Brennkammerwandung einer Gasturbine, die im besonderen Maße thermischen Belastungen ausgesetzt sind und darüberhinaus hinsichtlich des Gesamtwirkungsgrades, auf den der Kühlbedarf einen nicht unerheblichen Einfluss hat, aus ökologischen und ökonomischen Gründen ständig verbessert werden muss.

### Kurze Beschreibung der Zeichnung

In der Zeichnung sind Ausführungsbeispiele der Erfindung anhand schematischer Darstellungen wiedergegeben.

Es zeigen:
- Fig. 1: Kühlkanal einer Turbinenschaufel mit Rippen in perspektivischer Ansicht einschließlich dessen Orthogonalprojektion;
- Fig. 2: Kühlkanalabschnitt im Teillängsschnitt sowie im Querschnitt, Ausführungsvariante;
- Fig. 3: Kühlkanalabschnitt im Teillängsschnitt sowie im Querschnitt, weitere Ausführungsvariante;

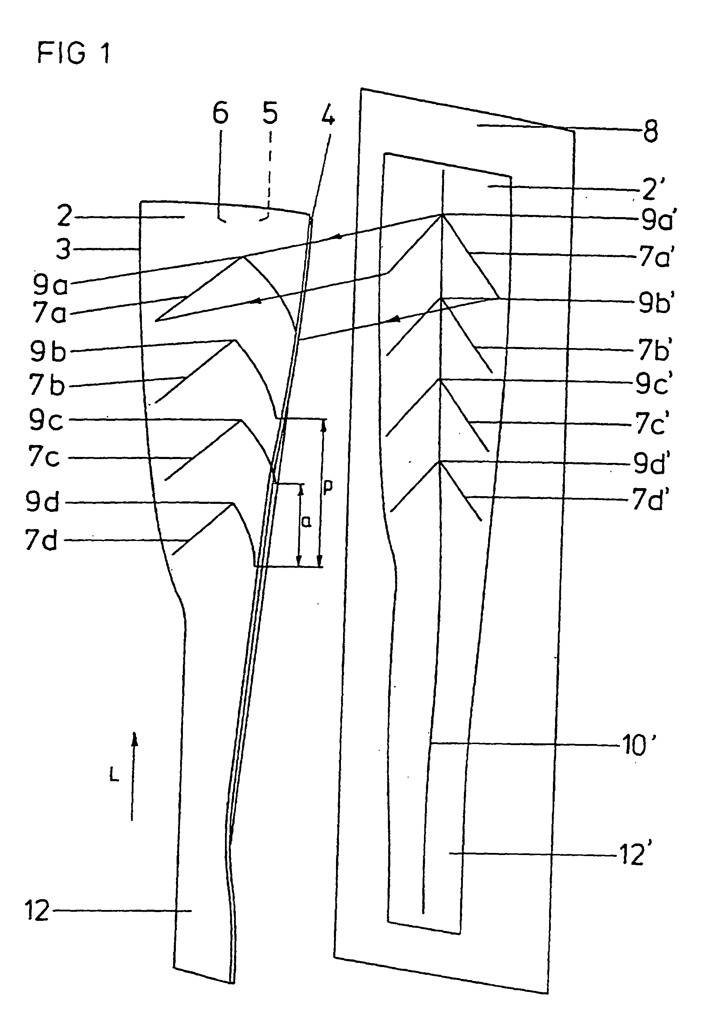

In Fig. 1 ist ein Hohlraum 2 einer im Übrigen nicht näher dargestellten Gasturbinenschaufel gezeigt. Er weist einen Schaufelfußabschnitt 12 auf und geht nach oben hin in einen Abschnitt über, der durch eine saugseitige Wand 5 und eine druckseitige Wand 6 definiert ist. Die saugseitige Wand 5 und die druckseitige Wand 6 grenzen jeweils seitlich aneinander und sind in einem Vorderkantenbereich 3 und einem Hinterkantenbereich 4 miteinander verbunden. An der saugseitigen Wand 5 sind Rippen 7a, 7c und an der druckseitigen Wand 6 Rippen 7b, 7d angebracht. Die Rippen 7a, 7b, 7c, 7d sind in Längsrichtung L abwechselnd und zueinander versetzt angebracht.

In der Orthogonalprojektion, die durch eine Projektionsebene 8 vorgegeben ist, werden die Rippen 7a, 7b, 7c, 7d als Winkel 7a', 7b', 7c', 7d' mit geradlinig verlaufenden Schenkeln abgebildet. Spitzen 9a', 9b', 9c', 9d' der Winkel 7a', 7b', 7c', 7d' liegen auf einer Mittenachse 10'. Die Winkel 7a',7b', 7c', 7d' sind äquidistant und parallel zueinander angeordnet.

Die Darstellung gemäß Fig. 1 verdeutlicht, dass die Rippen 7a, 7b, 7c, 7d eine gekrümmte Kontur aufweisen, die durch punktweises Konstruieren entstanden ist. Hierbei ist für jeden Punkt die Bedingung eingehalten, dass der Abstand a in Bezug auf die jeweils benachbarte Rippe der gegenüberliegenden Wand der Hälfte einer jeweiligen lokalen Rippenteilung p entspricht.

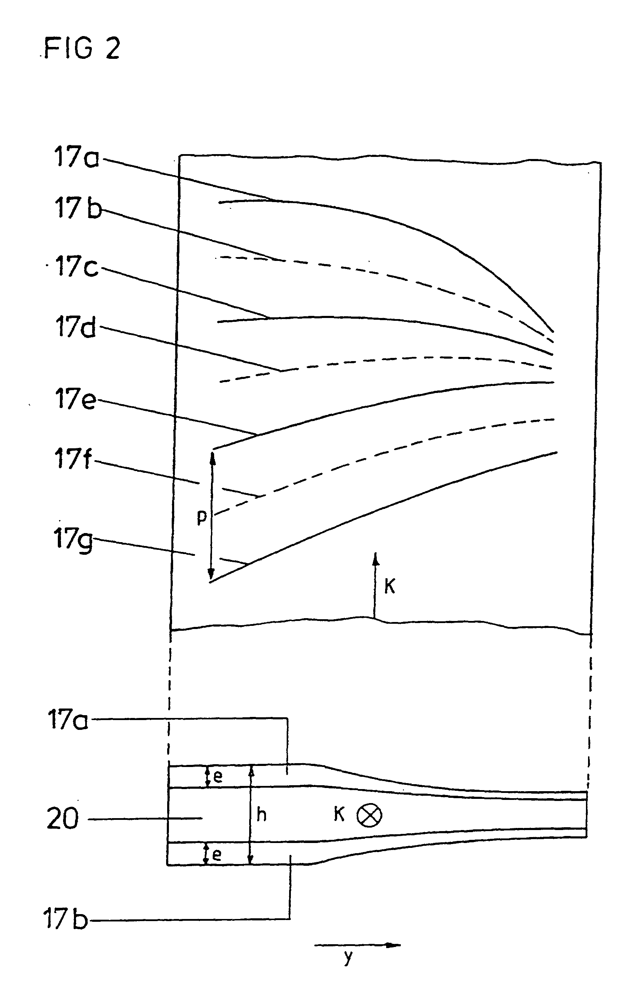

In Fig. 2 ist eine Konfiguration dargestellt, bei der die Wärmeübertragungsintensivierung in Strömungsrichtung K konstant gehalten wird. Ein Hohlraum 20 weist wiederum Rippen 17a, 17b, 17c, 17d, 17e, 17f, 17g auf, die abwechselnd und zueinander versetzt angebracht sind. Aufgrund der Krümmung des Hohlraumes 20 ist die lokale Rippenteilung p in einer Koordinatenrichtung y sehr stark variiert, so dass die Rippen 17a, 17b, 17c, 17d, 17e, 17f, 17g ebenfalls sehr stark gekrümmt verlaufen.

Zur Beibehaltung einer konstanten Wärmeübertragungsintensivierung für jede der Rippen 17a, 17b, 17c, 17d, 17e, 17f, 17g ist es erforderlich, das Verhältnis von lokaler Rippenteilung p zu einer lokalen Rippenhöhe e an jedem Punkt konstant zu halten. Dies führt zu einer Rippenform, die in sehr starkem Maße dreidimensional geformt ist.

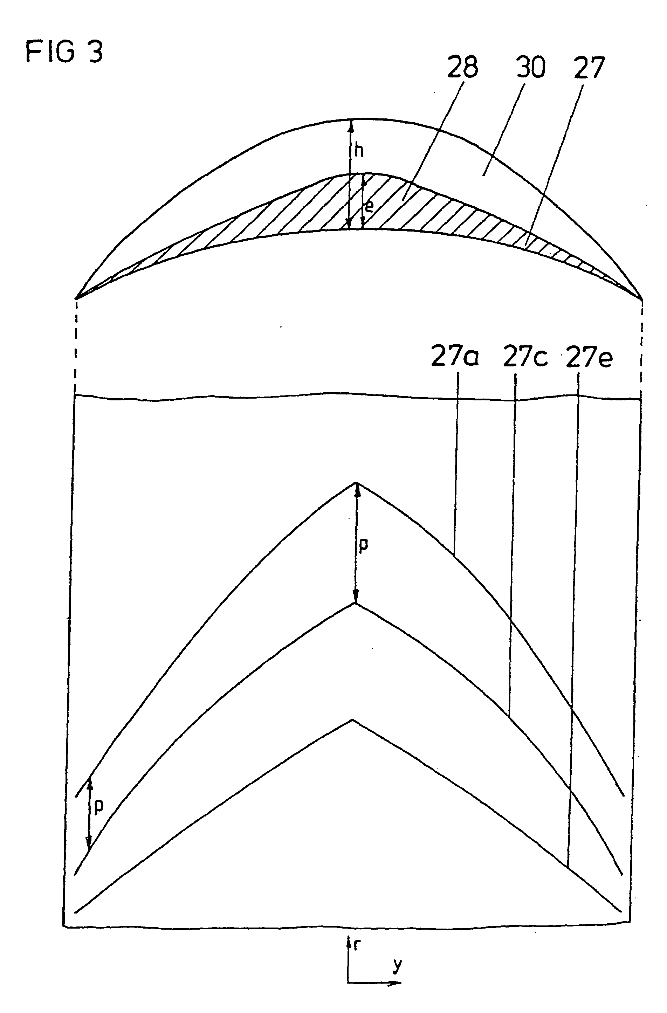

In Fig. 3 ist schließlich eine Konfiguration dargestellt, bei der trotz ungleichförmigem Wärmeeintrag von außen eine konstante Temperaturverteilung realisierbar ist. Eine Rippe 27 weist eine Überhöhung 28 auf, die durch Variation des Verhältnisses von lokaler Rippenhöhe e zu einer lokalen Raumhöhe h entstanden ist. Hierdurch wird die Strömung in die seitlichen Bereiche abgelenkt und es treten Sekundärströmungen auf. Die Sekundärströmungen sorgen für eine Vermischung von stark erhitztem Kühlfluid aus den Randbereichen mit Kühlfluid aus dem Kernbereich, und ermöglichen somit einen Temperaturausgleich.

Weiterhin ist nun auch das Verhältnis von lokaler Rippenteilung p zu lokaler Rippenhöhe e jeweils so gewählt, dass sich eine gleichmäßige Temperatur in einer Koordinatenrichtung r einstellt. Beispielsweise kann das Verhältnis von lokaler Rippenteilung p zu lokaler Rippenhöhe e im Bereich zwischen 12 für den Seitenbereich und 10 für den Kernbereich gemäß Ausführungsbeispiel der Fig. 3 gewählt werden. Das Resultat ist eine sehr stark dreidimensional konturierte Rippenform, wobei jede Rippe 27a, 27c, 27e abweichend geformt ist.

Es versteht sich von selbst, dass die Anwendung des erfindungsgemäßen Kühlkonzepts nicht auf die in den Figuren dargestellten Kühlkanalgeometrien beschränkt ist. Es eignet sich ebenso für stark gekrümmte Kühlkanäle, wie sie beispielsweise bei Rotorschaufeln der ersten Stufe einer Gasturbine auftreten.

### Bezugszeichenliste

- 2: Hohlraum
- 3: Vorderkantenbereich
- 4: Hinterkantenbereich
- 5: saugseitige Wand
- 6: druckseitige Wand
- 7a, 7c: Rippe saugseitige Wand
- 7b, 7d: Rippe druckseitige Wand
- 7a', 7b', 7c', 7d': Winkel (projizierte Rippe)
- 8: Projektionsebene
- 9a, 9b, 9c, 9d: Rippenspitze
- 9a', 9b', 9c', 9d': Spitze (projizierte Spitze)
- 10': Mittenachse (projiziert)
- 12: Schaufelfußabschnitt
- 12': Schaufelfußabschnitt (projiziert)
- 20: Hohlraum
- 17a, 17b, 17c, 17d, 17e, 17f, 17g: Rippe
- 27, 27a, 27c, 27e: Rippe
- 28: Überhöhung
- 30: Hohlraum

- a: Abstand
- e: lokale Rippenhöhe
- h: lokale Hohlraumhöhe
- p: lokale Rippenteilung
- r: Koordinatenrichtung
- y: Koordinatenrichtung
- K: Kühlfluid(strömung)
- L: Längsrichtung

## Patentansprüche

1. Kühlkanal eines thermisch hochbelasteten Bauteils,
- der als in einer Längsrichtung (L) verlaufender und orthogonal zur Längsrichtung (L) gekrümmter Hohlraum (2, 20, 30) zwischen einer ersten Wand (5) und einer zweiten Wand (6) gebildet ist, welche jeweils seitlich aneinander grenzend miteinander verbunden sind,
- der Rippen (7, 17, 27) aufweist, die in Längsrichtung (L) abwechselnd und zueinander versetzt an der ersten Wand (5) und zweiten Wand (6) angeordnet sind, und die zumindest abschnittsweise gegenüber einer projizierten Mittenachse (10') einen nicht-orthogonalen Winkel einnehmen, und
- der von einem Kühlfluid (K) in Längsrichtung (L) durchströmbar ist,
**dadurch gekennzeichnet, dass**
- die Rippen (7, 17, 27) jeweils aus zwei gekrümmten Rippensegmenten bestehen, die vom gradlinigen Verlauf, der durch den Anfangs- und Endpunkt der Rippensegmente geht, in Längsrichtung (L) des Kühlkanals abweicht, und eine Spitze (9) aufweisen.

2. Kühlkanal nach Anspruch 1,
**dadurch gekennzeichnet, dass**
bei einem orthogonal zur Längsrichtung (L) gekrümmten Verlauf des Hohlraumes (2, 20, 30) die Rippen (7, 17, 27) derart geformt sind, dass sie jeweils lokal in bezug auf die benachbarte Rippe der gegenüberliegenden Wand einen Abstand (a) einhalten, der die Hälfte einer jeweiligen lokalen Rippenteilung (p) beträgt.

3. Kühlkanal nach Anspruch 2,
**dadurch gekennzeichnet, dass**
das Verhältnis von lokaler Rippenteilung (p) zu einer lokalen Rippenhöhe (e) im wesentlichen an jedem Punkt der Rippe (7, 17, 27) konstant ist.

4. Kühlkanal nach Anspruch 1, **dadurch gekennzeichnet, dass** das Verhältnis von lokaler Rippenhöhe (e) zu einer lokalen Hohlraumhöhe (h) zur Bildung lokaler Überhöhungen (28) variiert.

5. Kühlkanal nach Anspruch 2 oder 4, **dadurch gekennzeichnet, dass** das Verhältnis von lokaler Rippenteilung (p) zu lokaler Rippenhöhe (e) variiert.

6. Kühlkanal nach einem der vorstehenden Ansprüche, **dadurch gekennzeichnet, dass** das Verhältnis von lokaler Rippenhöhe (e) zu lokaler Hohlraumhöhe (h) für nacheinander in Längsrichtung angeordnete Rippen (7, 17, 27) zunimmt.

7. Kühlkanal nach Anspruch 1, **dadurch gekennzeichnet, dass** die Rippen (7) in einer Orthogonalprojektion als Winkel (7') mit geradlinig verlaufenden Schenkeln abbildbar sind.

8. Kühlkanal nach Anspruch 7, **dadurch gekennzeichnet, dass** sämtliche Winkel (7') symmetrisch in Bezug auf eine Mittenachse (10') und parallel zueinander angeordnet sind.

9. Kühlkanal nach einem der vorstehenden Ansprüche als Bestandteil einer kühlbaren Turbinenschaufel.

10. Kühlkanal nach einem der vorstehenden Ansprüche als Bestandteil einer kühlbaren Brennkammerwandung einer Gasturbine.

## Claims

1. Cooling passage of a component subjected to high thermal loading,
- which is formed as a cavity (2, 20, 30), running in a longitudinal direction (L) and curved orthogonally to the longitudinal direction (L), between a first wall (5) and a second wall (6), which in each case are connected to one another in a laterally adjacent manner,
- which has ribs (7, 17, 27), which are arranged on the first wall (5) and the second wall (6) such that they alternate in a longitudinal direction (L) and are staggered relative to one another and, at least in sections, assume a non-orthogonal angle relative to a projected centre axis (10'), and
- through which a cooling fluid (K) can flow in a longitudinal direction (L),
**characterized in that**
- the ribs (7, 17, 27) each consist of two curved rib segments, which deviates from the rectilinear profile, which passes through the starting and end points of the rib segments, in a longitudinal direction (L) of the cooling passage, and have an apex (9).

2. Cooling passage according to Claim 1, **characterized in that**, when the profile of the cavity (2, 20, 30) is curved orthogonally to the longitudinal direction (L), the ribs (7, 17, 27) are formed in such a way that, in each case locally with regard to the adjacent rib of the opposite wall, they maintain a distance (a) which is half a respective local rib spacing (p).

3. Cooling passage according to Claim 2, **characterized in that** the ratio of local rib spacing (p) to a local rib height (e) is essentially constant at each point of the rib (7, 17, 27).

4. Cooling passage according to Claim 1, **characterized in that** the ratio of local rib height (e) to a local cavity height (h) varies in order to form local prominences (28).

5. Cooling passage according to Claim 2 or 4, **characterized in that** the ratio of local rib spacing (p) to local rib height (e) varies.

6. Cooling passage according to one of the preceding claims, **characterized in that** the ratio of local rib height (e) to local cavity height (h) increases for ribs (7, 17, 27) arranged one after the other in a longitudinal direction.

7. Cooling passage according to Claim 1, **characterized in that** the ribs (7) can be depicted in an orthogonal projection as angles (7') having rectilinearly running legs.

8. Cooling passage according to Claim 7, **characterized in that** all the angles (7') are arranged symmetrically with regard to a centre axis (10') and parallel to one another.

9. Cooling passage according to one of the preceding claims as an integral part of a coolable turbine blade.

10. Cooling passage according to one of the preceding claims as an integral part of a coolable combustion-chamber wall of a gas turbine.

## Revendications

1. Canal de réfrigération pour un composant fortement sollicité thermiquement,
- qui est formé en tant qu'espace creux (2, 20, 30) s'étendant dans une direction longitudinale (L) et courbé perpendiculairement à la direction longitudinale (L) entre une première paroi (5) et une deuxième paroi (6), lesquelles sont connectées l'une à l'autre de manière adjacente latéralement,
- qui présente des nervures (7, 17, 27) qui sont disposées en alternance dans la direction longitudinale (L) et décalées les unes par rapport aux autres sur la première paroi (5) et la deuxième paroi (6), et qui adoptent au moins par portion, par rapport à un axe médian projeté (10'), un angle non orthogonal, et
- qui peut être parcouru par un fluide réfrigérant (K) dans la direction longitudinale (L),
**caractérisé en ce que**
- les nervures (7, 17, 27) se composent à chaque fois de deux segments nervurés courbes qui s'écartent d'une forme rectiligne traversant le point de départ et le point terminal des segments nervurés, dans la direction longitudinale (L) du canal de réfrigération et présentent une pointe (9).

2. Canal de réfrigération selon la revendication 1,
**caractérisé en ce que**
pour une forme courbe perpendiculaire à la direction longitudinale (L) de l'espace creux (2, 20, 30), les nervures (7, 17, 27) sont formées de telle sorte qu'elles conservent à chaque fois localement par rapport à la nervure voisine de la paroi opposée une distance (a) qui correspond à la moitié d'une division respective locale des nervures (p).

3. Canal de réfrigération selon la revendication 2,
**caractérisé en ce que**
le rapport entre la division des nervures locales (p) et une hauteur locale des nervures (e) est essentiellement constant en chaque point de la nervure (7, 17, 27).

4. Canal de réfrigération selon la revendication 1, **caractérisé en ce que** le rapport entre la hauteur locale des nervures (e) et une hauteur d'espace creux locale (h) pour la formation de surélévations locales (28) varie.

5. Canal de réfrigération selon la revendication 2 ou 4, **caractérisé en ce que** le rapport entre la division locale des nervures (p) et la hauteur locale des nervures (e) varie.

6. Canal de réfrigération selon l'une quelconque des revendications précédentes, **caractérisé en ce que** le rapport entre la hauteur locale des nervures (e) et la hauteur locale des espaces creux (h) augmente pour des nervures (7, 17, 27) disposées les unes derrière les autres dans la direction longitudinale.

7. Canal de réfrigération selon la revendication 1, **caractérisé en ce que** les nervures (7) peuvent être reproduites dans une projection orthogonale sous forme d'angle (7') avec des branches s'étendant en ligne droite.

8. Canal de réfrigération selon la revendication 7, **caractérisé en ce que** tous les angles (7') sont disposés symétriquement par rapport à un axe médian (10') et parallèlement les uns aux autres.

9. Canal de réfrigération selon l'une quelconque des revendications précédentes, en tant que constituant d'une aube de turbine pouvant être refroidie.

10. Canal de réfrigération selon l'une quelconque des revendications précédentes, en tant que constituant d'une paroi de chambre de combustion pouvant être refroidie d'une turbine à gaz.
